# EUROPEAN PATENT APPLICATION

(11) **EP 4 815 130 A1**
(43) Date of publication of application: **30.09.2026**
(21) Application number: 24894756.6
(22) Date of filing: 18.11.2024
(51) Int. Cl.: H01M 50/184, H01M 50/186, H01M 50/152, H01M 50/167, H01M 50/107

(54) **CAP GASKET OF CYLINDRICAL SECONDARY BATTERY, AND CYLINDRICAL SECONDARY BATTERY USING SAME**

(30) Priority: 24.11.2023 KR 20230165808; 14.10.2024 KR 20240139346
(71) Applicant: LG Energy Solution, Ltd., Seoul 07335 (KR)
(72) Inventor: LEE, Dasom, Daejeon 34122 (KR); KO, Kwang Hun, Daejeon 34122 (KR); KIM, Do Gyun, Daejeon 34122 (KR); HWANG BO, Kwang Su, Daejeon 34122 (KR)
(74) Representative: Goddar, Heinz J.
(86) International application number: PCT/KR2024/096599
(87) International publication number: WO 2025/110866

(57) **Abstract**

Provide are a cap gasket and a battery cell employing the same that maintain sealing force without excessive deformation even after crimping process. The cap includes: a first gasket and a second gasket fastened to an axially outer side of the first gasket, The first gasket includes: a first radial extension; an axial extension extending axially outward from an outer radial end of the first radial extension; and one or more first fastening parts provided at an outer axial end of the axial extension. The second gasket includes: a second radial extension; and one or more second fastening parts provided at an axially inner side of an outer radial end of the second radial extension and fastened to the one or more first fastening parts in axial direction. The first fastening part and the first fastening part include a first hooking part and a second hooking part fastened to each other in radial direction, respectively.

## Description

### [TECHNICAL FIELD]

This application claims the benefit of priority based on Korean Patent Application No. 10-2023-0165808 filed on November 24, 2023 and Korean Patent Application No. 10-2024-0139346 filed on October 14, 2024, entire content disclosed in the document of the patent applications is included as a part of this specification.

The present invention relates to a cap gasket of cylindrical secondary battery and cylindrical secondary battery employing the same, and more particularly, to a cap gasket and cylindrical secondary battery employing the same capable of maintaining sealing force without excessive deformation even when crimped.

### [BACKGROUND ART]

The process of manufacturing a battery cell using a cylindrical can includes the steps of: subjecting a metal sheet to deep drawing to form a circular bottom portion and a circular tubular side wall connected thereto; accommodating an electrode assembly therein; and then covering the open end of the sidewall member with a cap.

A typical method for covering and closing the open end of the side wall member with a cap is to form a beading on the side wall member, interpose a cap gasket on the axially outer surface of the beading, and form a crimped portion that compresses the edge of the cap.

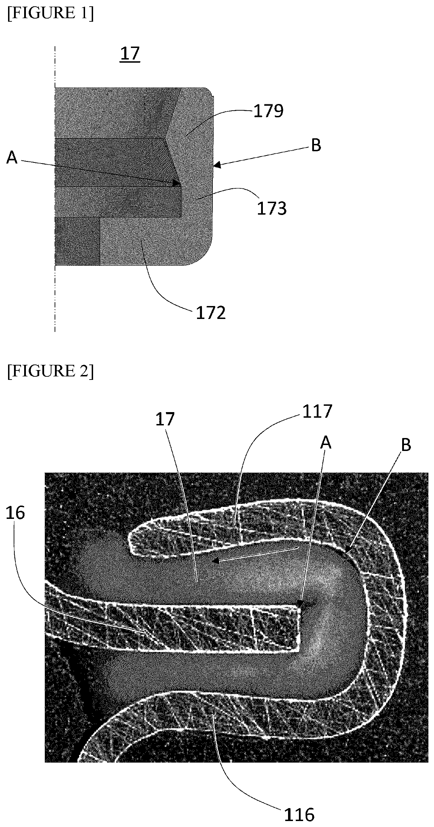

Referring to FIG. 1, a conventional cap gasket 17 includes an inner radial extension 172 arranged on the axially inner side, an axial extension 173 extending axially outward from the inner radial extension 172, and a deformed seal 179 extending axially from the outer axial end of the axial extension 173 and bent radially inward by a crimped portion.

With the position of the edge of the cap 16 controlled to be in contact with the inner radial extension 172 and axial extension 173 and the cap gasket 17 and cap 16 inserted into the beading 116 provided at the open end of the can, the edge of the can is crimped radially inward to form the crimped portion 117.

As a result, as shown in FIG. 2, the inner side surface of the cap gasket 17 is pressed against the axially outer surface provided on the axially outer side of the edge of the cap 16, the radially outer surface provided on the radially outer side and the axially inner surface provided on the axially inner side, and the outer side surface of the cap gasket 17 is pressed against the axially inner side surface of the crimped portion 117 and the axially outer surface of the beading 116, thereby sealing the open end of the can.

However, in the conventional cap gasket 17, when the deformed seal 179 is bent radially inward by the crimping process. due to the structure thereof, the inner radial end A of the boundary between the axial extension 173 and the deformed seal 179 is greatly compressed as the deformed seal 179 comes into contact with the radially outer surface and the corner portion of the axially outer surface provided at the upper end of the edge of the cap 16, and the outer circumference B of the deformed seal 179 adjacent to the boundary between the axial extension 173 and the deformed seal 179 cannot avoid being greatly stretched in the axial direction.

When the inner end A is bent to an extreme extent as described above, as shown in FIG. 2, the upper corner portion of the edge of the cap 16 and the cap gasket 17 may not come into contact with each other and may float.

In addition, during the plastic processing of the crimped portion 117 of the can, the upper corner of the edge of the cap 16 may strongly scratch the inner wall of the cap gasket 17, causing the coating material applied to the cap gasket 17 for sealing to peel off, thereby weakening the sealing force.

In addition, when the outer circumference B of the deformed seal 179 is excessively stretched in the direction of the arrow shown in FIG. 2, the outer circumferential surface of the cap gasket 17 may not come into close contact with the inner circumferential surface of the crimped portion 117 and may float, as shown in FIG. 2.

Damage to such coating material, the gap between the cap gasket 17 and the cap 16 or the gap between the cap gasket 17 and the can may become a leakage path for electrolytes.

### [DISCLOSURE]

### [TECHNICAL PROBLEM]

In order to solve above-described problems, it is an object of the present invention to provide a structure of a cap gasket and a structure of a cylindrical secondary battery employing the same capable of preventing the coating material of a cap gasket from being scratched by the cap during the crimping process of the open end of a side wall member of a can to seal the open end of the can with the cap.

It is an object of the present invention to provide a structure of a cap gasket and a structure of a cylindrical secondary battery employing the same capable of preventing the cap gasket from being lifted from the surface of the cap or can due to excessive tension or compression during the crimping process.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The present invention may be applied to a battery cell including an electrode assembly and a housing accommodating the electrode assembly.

The electrode assembly may have a form of a jelly roll, with a first electrode and a second electrode laminated with a separator interposed therebetween and wound around a predetermined core axis.

The current collector of the first electrode may protrude axially outward, exposing the surface thereof. The current collector of the second electrode may protrude axially outward, exposing the surface thereof.

The current collector of the first electrode and the current collector of the second electrode may protrude axially outward from the first axial end and the second axial end, respectively.

The portion of the current collector exposed outward from the axial end of the electrode assembly may constitute an electrode tab of the corresponding electrode.

The electrode tab may be bent in radial direction. Preferably, the electrode tab may be bent radially inward and may overlap axially.

The electrode tab of the first electrode may be electrically connected to a first electrode terminal provided in the housing, and the electrode tab of the second electrode may be electrically connected to a second electrode terminal provided in the housing.

The electrode tab of the first electrode may be bonded to a first current collecting plate, and the first current collecting plate may be bonded to the first electrode terminal. The first current collecting plate may electrically connect the first electrode to the first electrode terminal.

The electrode tab of the second electrode may be bonded to a second current collecting plate, and the second current collecting plate may be electrically connected to the second electrode terminal. The second current collecting plate may electrically connect the second electrode to the second electrode terminal.

The housing may be a can made of a metal material.

The housing may be cylindrical.

The can may include a side wall member extending in the axial direction and enclosing an internal space extending in the axial direction, and an open end provided at one axial end of the side wall member.

The battery cell may include a cap covering the open end.

A bottom member may be connected to the other axial end of the side wall member, and thus the other axial end of the side wall member may be a closed end.

The first electrode terminal may be installed at the bottom member with a gasket interposed therebetween. The gasket may seal the gap between the first electrode terminal and the bottom member and electrically insulate the first electrode terminal from the bottom member.

The second electrode terminal may be constituted by the bottom member.

The cap may be fixed to the side wall member of the can by having the edge thereof compressed against a beading and a crimped portion provided at the open end of the can.

A cap gasket may be interposed between the edge of the cap and the side wall member.

The edge of the cap may be pressed by the beading and the crimped portion with the cap gasket interposed therebetween, thereby sealing the connecting portion between the cap and the can.

In order to solve the above-described problems, the present invention provides a loop-shaped cap gasket including a first gasket and a second gasket fastened to the first gasket on the axially outer side of the first gasket.

The loop shape may include a ring shape.

The loop shape may be a closed loop.

The first gasket includes: a first radial extension extending radially; and an axial extension extending axially outward from an outer radial end of the first radial extension.

The second gasket includes a second radial extension extending radially.

The second gasket is stacked in axial direction on the first gasket on the axially outer side of the first gasket.

The first gasket includes: a first fastening part provided at an outer axial end of the axial extension. One or two or more first fastening parts may be provided.

The second gasket includes a second fastening part provided at an axially inner side of an outer radial end of the second radial extension and fastened to the one or the plurality of first fastening parts in axial direction. Two or more first fastening parts and two or more second fastening parts may be fastened to each other in axial direction, respectively.

Accordingly, when the cap gasket is compressed and deformed by forming the crimped portion of the can, the direction in which the cap gasket deforms corresponds to the direction in which adhesion should occur between the cap gasket and the can and to the direction in which adhesion should occur between the cap gasket and the cap. Therefore, by minimizing the deformation of the cap gasket unrelated to the sealing force, the sealing performance of the cap gasket may be further enhanced.

The first fastening part and the second fastening part fastened thereto may be radially spaced apart from an inner radial end and an outer radial end of the axial extension. At least a pair of the first fastening part and a pair of the second fastening parts may be radially spaced apart from the inner radial end and the outer radial end of the axial extension therebetween.

The first fastening parts and the second fastening part fastened thereto may be disposed at a radial position corresponding to an inner radial end of the axial extension. At least a pair of the first fastening part and a pair of the second fastening parts may be disposed at a radial position corresponding to an inner radial end of the axial extension.

The first fastening parts and the second fastening part fastened thereto may be disposed at a radial position corresponding to an outer radial end of the axial extension. At least a pair of the first fastening part and a pair of the second fastening parts may be disposed at a radial position corresponding to an outer radial end of the axial extension.

The first fastening parts and the second fastening part fastened thereto may extend along circumferential directions of the first gasket and the second gasket, respectively.

Preferably, each of the pair of first fastening parts and the pair of second fastening parts may have loop shape. The loop shape may be a closed loop.

Preferably, the plurality of first fastening parts may be arranged along a radial direction, and the plurality of second fastening parts may be arranged along radial direction to correspond to the plurality of first fastening parts.

Preferably, at least two first fastening parts may be arranged to be connected in radial direction, and at least two second fastening parts corresponding to the at least two first fastening parts may be arranged to be connected in radial direction.

In one embodiment, one and the other of the first fastening part and the second fastening part may be provided with a fastening groove recessed in an axial direction and a fastening projection extending in axial direction to be inserted into the fastening groove in axial direction, respectively.

For example, the first fastening part may include a fastening groove recessed axially inward from axially outer surface, and the second fastening part may include a fastening projection protruding axially inward from the outer radial end of the second radial extension.

For example, the first fastening part may include a fastening projection protruding axially outward from the axially outer surface of the axial extension, and the second fastening part may include a fastening groove recessed axially outward from the axially inner surface of the outer radial end of the second radial extension.

One first fastening part and another first fastening part of the plurality of first fastening parts may be provided with a fastening groove and a fastening projection, respectively, and one second fastening part and another second fastening part of the plurality of second fastening parts corresponding to the one first fastening part and the another first fastening part may be provided with a fastening groove and a fastening projection, respectively.

Preferably, the one first fastening part and the another first fastening part may be arranged to be connected in radial direction, and the one second fastening part and the another second fastening part corresponding to the one first fastening part and the another first fastening part may be arranged to be connected in radial direction.

Accordingly, due to pressure applied axially inward to the second radial extension portion of the second gasket by the inwardly bent portion formed during the crimping process applies pressure, the fastening projection receives a stronger insertion force in the axial direction into the fastening groove, thereby securing a higher fastening force. Therefore, the second gasket may be more reliably prevented from being pushed radially inward by the inwardly bent portion formed during the crimping process.

In one embodiment, the fastening projection may be provided with a hook protruding radially from an extending end thereof, and the fastening groove corresponding to the fastening projection may be provided with a hook groove recessed radially at a recessed end thereof to accommodate the hook in the radial direction.

Preferably, the hook may be provided at one of or both of a radially inner side and a radially outer side of the fastening projection, and the hook groove may be provided at one of or both of a radially inner side and a radially outer side of the fastening groove to correspond to the hook.

Accordingly, even before the crimping process, the first and second gaskets may be more reliably restrained in the axial direction by the engagement structure of the hook groove and hook, thereby temporarily integrating the first and second gaskets.

In one embodiment, a radially inner surface of the axial extension of the first gasket may be provided with a first radially outer surface facing a radially outer surface of the cap in radial direction, and an axially inner surface of the second radial extension of the second gasket may be provided with a first axially inner surface facing an edge of an axially outer surface of the cap facing an axially outer surface in axial direction.

Preferably, the radially inner surface of the axial extension of the first gasket may be further provided with a second radially outer surface extending axially outer than the radially outer surface of the cap.

Accordingly, since the first gasket may protrude axially outer than the axially outer surface of the cap, the second gasket may be prevented from being pushed radially inward by the protruding portion of the first gasket during the crimping process.

Preferably, the axially inner surface of the second radial extension of the second gasket may be further provided with a second axially inner surface extending axially outer than the radially outer surface of the cap.

Accordingly, since the cap gasket area corresponding to the radially outer surface of the cap and the corner portion of the axially outer surface may be prevented from being excessively folded and compressed during the crimping process, the sealing force of the cap gasket may be prevented from being reduced.

In one embodiment, a second corner provided at an axially outer side of the outer radial end of the second radial extension may be rounded.

Accordingly, the second corner may be prevented from being excessively deformed or deformed in an unintended direction by the inwardly bent portion. Furthermore, the compression force in the axial direction and the compression force in the radial direction generated by the inwardly bent portion may be evenly applied to the second corner area such that the compression force by the inwardly bent portion may be fully applied to increase the fastening force of the first gasket and second gasket and improve the sealing force of the cap gasket.

In one embodiment, a first corner provided at an axially inner side of the outer radial end of the first radial extension may be rounded.

Accordingly, when placing the first gasket on the axially outer surface of the beading, the outer surface of the first gasket may naturally come in contact with the inner wall of the can.

Preferably, by setting the round radius of the second corner to be smaller than that of the first corner, the compression force at the second corner and the fastening force of the first gasket and the second gasket may be stably secured.

In addition, in order to solve the above-described problems, the present invention provides a battery cell employing the cap gasket described above.

The battery cell may be a cylindrical secondary battery.

The battery cell includes a can provided with a side wall member with an open end.

A beading formed by recessing radially inward the side wall member near the open end is provided.

The side wall member further includes a crimped portion disposed axially outer than the beading and formed by bending an end of the side wall member radially inward.

The battery cell is provided with a cap sealing the open end.

The edge of the cap is disposed between the beading and crimped portion in the axial direction to be compressed and fixed.

The edge of the cap is compressed and fixed by the beading and crimped portion with a cap gasket therebetween.

The first gasket is disposed on an axially outer surface of the beading.

The axially inner surface of the second radial extension is in contact with the axially outer surface of the axial extension in axial direction, and the second fastening part of the second gasket is fastened to the first fastening part of the first gasket in axial direction.

The edge of the cap is in contact with an axially outer surface of a first radial extension of the first gasket, a radially inner surface of an axial extension and an axially inner surface of the second radial extension of the second gasket.

Preferably, an axially outer corner of the edge of the cap may be aligned with the contacting portion of the radially inner corner of the axial extension of the first gasket and the second radial extension of the second gasket.

Accordingly, the phenomenon of the edge of the cap scratching the cap gasket may be prevented and suppressed.

Preferably, the inwardly bent portion of the crimped portion may be disposed axially outer than the bonding surfaces of the first gasket and the second gasket.

Preferably, the inwardly bent portion of the crimped portion may be disposed radially outer than the cap.

Accordingly, the compression force in the axial direction and the compression force in the radial direction generated by the inwardly bent portion may be evenly applied to the second corner area such that the compression force by the inwardly bent portion may be fully applied to increase the fastening force of the first gasket and second gasket and improve the sealing force of the cap gasket.

### [ADVANTAGEOUS EFFECTS]

According to the present invention, in order to prevent excessive deformation of the cap gasket during the crimping process of the open end of the side wall member of the can to seal the open end of the can with the cap, the cap gasket is provided with a first radial extension, an axial extension, and a second radial extension. Therefore, the phenomenon of the cap gasket being excessively compressed or excessively stretched at a specific point by the crimping process may be prevented, thereby preventing the cap gasket from lifting off from the surface of the cap or can.

According to the present invention, the cap gasket is manufactured separately into a first gasket and a second gasket, and the second gasket is provided with a second radial extension, thereby facilitating the assembly process of the cap.

According to the present invention, since the axially outer corner of the edge of the cap is aligned with the contact area of the radially inner corner of the axial extension of the first gasket and the second radial extension of the second gasket, the portion of the cap gasket in contact with the corner portion of the cap does not move relative to the corner portion during the processing of the crimped portion. Therefore, the coating material of the cap gasket may be prevented from being scratched by the cap.

In addition to the advantageous effects described above, specific effects of the present invention will be described further while describing specific details of the present invention.

### [BRIEF DESCRIPTION OF DRAWINGS]

FIG. 1 is a partial cross-sectional perspective view of a conventional cap gasket.
FIG. 2 is a cross-sectional photograph illustrating the cap gasket of FIG. 1 sealed fixed with beading and crimped portion.
FIG. 3 is an exploded perspective view of a cap gasket according to a first embodiment of the present invention.
FIG. 4 is a side cross-sectional view of the cap gasket of FIG. 3.
FIG. 5 is a side cross-sectional view illustrating the cap gasket and the cap of FIG. 3 placed on an open end of a can.
FIG. 6 is an enlarged view of the box portion of FIG. 5.
FIG. 7 illustrates the can of FIG. 6 after being crimped.
FIG. 8 is an enlarged cross-sectional view of a cap gasket according to a second embodiment.
FIG. 9 is an enlarged cross-sectional view of a cap gasket according to a third embodiment.
FIG. 10 is an enlarged view of the fastening portion of the cap gasket of FIG. 9 during the fastening process.
FIG. 11 is an enlarged cross-sectional view of a cap gasket according to a fourth embodiment.
FIG. 12 is an enlarged view of a fastened portion during a fastening process of the cap gasket of FIG. 11.
FIG. 13 is an enlarged cross-sectional view of a cap gasket according to a fifth embodiment.
FIG. 14 is an enlarged view of a fastened portion during a fastening process of the cap gasket of FIG. 13.
FIG. 15 is an enlarged cross-sectional view of a cap gasket according to a sixth embodiment.
FIG. 16 is an enlarged view of a fastened portion during a fastening process of the cap gasket of FIG. 15.
FIG. 17 is an enlarged cross-sectional view of a cap gasket of according to seventh embodiment.
FIG. 18 is an enlarged view of a fastened portion during a fastening process of the cap gasket of FIG. 17.
FIG. 19 is an enlarged cross-sectional view of a cap gasket according to an eighth embodiment.
FIG. 20 is an enlarged view of a fastened portion during a fastening process of the cap gasket of FIG. 19.
FIG. 21 is an enlarged cross-sectional view of a cap gasket according to a ninth embodiment.
FIG. 22 is an enlarged view of a fastened portion during a fastening process of the cap gasket of FIG. 21.
FIG. 23 is a side cross-sectional view illustrating a battery cell employing the cap gasket according to the first embodiment.

### [DESCRIPTION OF REFERENCE NUMERALS]

10: can (housing)
11: side wall member
116: beading
1161: axially outer surface
117: crimped portion
1171: inwardly bent portion
12: bottom member
13: first electrode terminal (anode terminal)
14: gasket
15: second electrode terminal
16: cap
161: radially outer surface
162: axially inner surface
163: axially outer surface
17: cap gasket
171: first gasket (inner gasket)
172: first radial extension (inner radial extension)
1722: axially outer surface
C1: first corner
173: axial extension
1730: radially inner surface
1731: first radially outer surface
1732: second radially outer surface
174: first fastening part (fastening groove, fastening projection)
1741: first hooking part (hook groove, hook)
175: second gasket (outer gasket)
176: second radial extension (outer radial extension)
1760: axially inner surface
1761: first axially inner surface
1762: second axially inner surface C2: second corner
177: second fastening part (fastening projection, fastening groove)
1771: second hooking part (hook, hook groove)
178: fastening guide
179: deformed seal
19: insulator
20: electrode assembly
21: first electrode
22: second electrode
27: electrode tab
29: core cavity
31: first current collecting plate (anode current collecting plate)
32: second current collecting plate (cathode current collecting plate)

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

In the description of the embodiments, "axial direction" refers to "a direction in which the axis constituting the winding center of the jelly-roll type electrode assembly extends", and "radial direction" refers to "a direction toward (centripetal) or away (centrifugal) from the axis," and "circumferential direction" refers to "a direction surrounding the axis."

The battery cell employing the cap gasket 17 according to the embodiment may be, for example, a cylindrical battery cell having a form factor ratio (defined as the diameter of the cylindrical battery cell divided by the height, that is, the ratio of the diameter to the height) greater than approximately 0.4.

Here, the form factor refers to values representing the diameter and the height of a cylindrical battery cell. The cylindrical battery cell may be, for example, a 46110 cell, a 48750 cell, a 48110 cell, a 48800 cell or a 46800 cell. In the values representing the form factor, the first two numbers represent the diameter of the cell, the next two numbers represent the height of the cell, and the last number 0 represents that the cross-section of the cell is circular.

The battery cell may be a cell that is approximately cylindrical with a diameter of approximately 46 mm, a height of approximately 110 mm and a form factor ratio of 0.418.

A battery cell according to another embodiment may be a cell that is approximately cylindrical with a diameter of approximately 48 mm, a height of approximately 75 mm and a form factor ratio of 0.640.

A battery cell according to yet another embodiment may be a cell that is approximately cylindrical with a diameter of approximately 48 mm, a height of approximately 110 mm and a form factor ratio of 0.418.

A battery cell according to yet another embodiment may be a cell that is approximately cylindrical with a diameter of approximately 48 mm, a height of approximately 80 mm and a form factor ratio of 0.600.

A battery cell according to another embodiment may be a cell that is approximately cylindrical with a diameter of approximately 46 mm, a height of approximately 80 mm and a form factor ratio of 0.575.

The present invention may be apparently applied to battery cells with a form factor ratio of approximately 0.4 or less, for example, 18650 cells, 21700 cells, etc. For an 18650 cell, its diameter is approximately 18 mm, its height is approximately 65 mm, and the form factor ratio is 0.277. For a 21700 cell, its diameter is approximately 21 mm, its height is approximately 70 mm, and the form factor ratio is 0.300.

### [CAP GASKET]

### <FIRST EMBODIMENT>

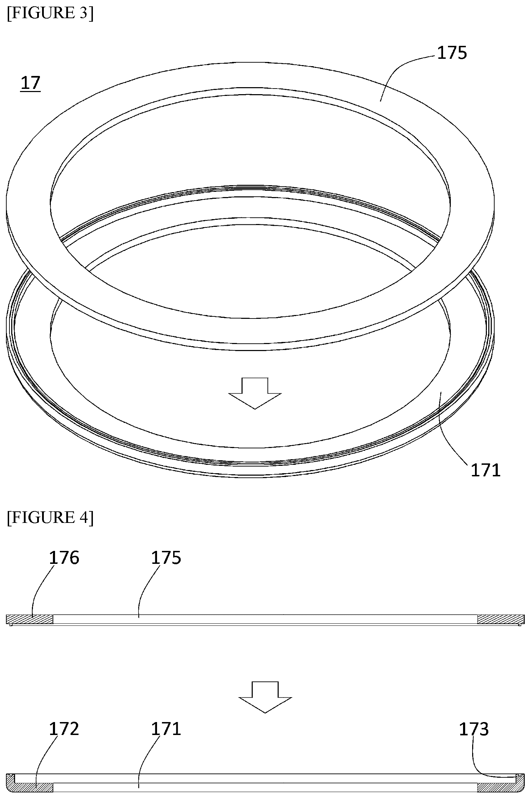

Referring to FIGS. 3 to 6, the cap gasket 17 according to the first embodiment includes a first gasket 171 and a second gasket 175 connected to the first gasket 171 on the axially outer side of the first gasket.

The second gasket 175 is manufactured in a pre-deformed form in a portion that is subject to excessive deformation when forming a conventional crimped portion.

It is preferable that the second gasket 175 be manufactured separately for the convenience of the assembly process of the cap and the cap gasket.

The first gasket 171 includes a first radial extension 172 extending in radial direction. The first radial extension 172 may include a portion interposed between a beading 116 of a can 10 and the axially inner surface of a cap 16.

The first gasket 171 includes an axial extension 173 extending axially outward from the outer radial end of the first radial extension 172. The axial extension 173 may include a portion interposed between a portion of the side wall member 11 positioned between the beading 116 and the crimped portion 117 of the can 10 and the radially outer surface 161 of the cap 16.

The second gasket 175 includes a second radial extension 176 extending in the radial direction. The second radial extension 176 may include a portion interposed between the crimped portion 117 of the can 10 and the axially outer surface of the cap 16.

The outer radial end of the second radial extension 176 is in contact with or is connected to the outer axial end of the axial extension 173.

To facilitate assembly, the first gasket 171 and the second gasket 175 are manufactured separately. However, to securely connect the first gasket 171 and the second gasket 175, a first fastening part 174 is provided on the axially outer surface of the axial extension 173 of the first gasket 171, and a second fastening part 177 is provided on the axially inner side of the outer radial end of the second radial extension 176 of the second gasket 175.

The cap gasket 17 according to the first embodiment is implemented in a form having one first fastening part 174 and one second fastening part 177.

The first fastening part 174 and the second fastening part 177 fastened thereto are disposed between and radially spaced apart from the inner radial end and the outer radial end of the axial extension 173.

The first fastening part 174 and the second fastening part 177 are fastened to each other in the axial direction.

Accordingly, the first fastening part 174 and the second fastening part 177 restrict the second gasket 175 from moving radially relative to the first gasket 171.

In the first embodiment, the first fastening part 174 includes a fastening groove that is recessed axially inward from the axially outer surface of the axial extension 173. In addition, the second fastening part 177 includes a fastening projection protruding axially inward from the outer radial end of the second radial extension 176.

In the first embodiment, the fastening projection of the second fastening part 177 and the fastening groove of the first fastening part 174 are continuously arranged along the circumferential direction in a closed loop form are exemplified.

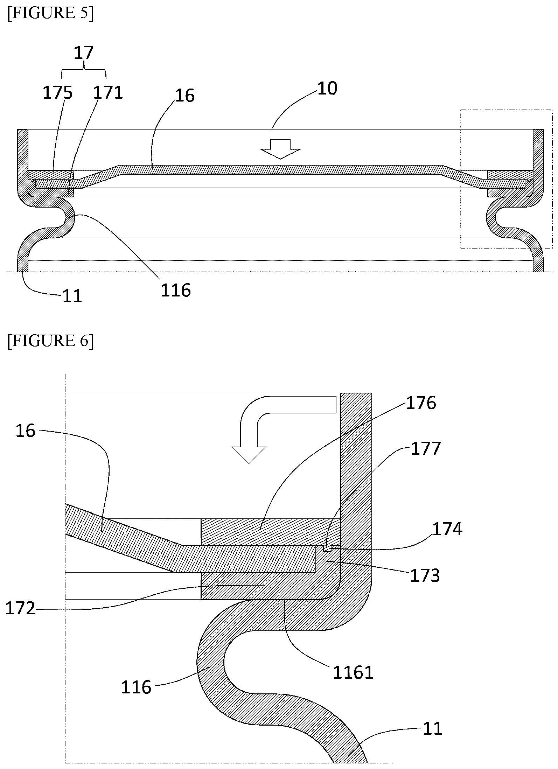

A first corner C1 provided on the axially inner side of the outer radial end of the first radial extension 172 is rounded. As a result, as shown in FIG. 6, when placing the first gasket 171 on the beading 116, the outer surface of the first gasket 171 comes into contact with the inner surface of the beading 116 in entirety such that the first gasket 171 is placed in the correct position.

With reference to FIGS. 5 to 7, the sealing structure of the can 10 using the cap gasket 17 will be described.

The cap gasket 17 is interposed between the cap 16 and the can 10 when sealing the open end of the battery can 10.

The can 10 has a hollow cylindrical side wall member 11.

Near the open end of the side wall member 11, the beading 116 is provided by recessing the side wall member 11 radially inward. Accordingly, the beading 116 has an axially outer surface 1161 on the radially inner side of the side wall member 11.

The first gasket 171 is inserted so as to be placed on the axially outer surface 1161 of the beading 116.

The first corner C1 of the first gasket 171 is rounded so as to have a shape corresponding to the curved surface shape of the connecting part between the side wall member 11 and the beading 116 to some extent. Accordingly, the first radial extension 172 may face and be in contact with the axially outer surface 1161 in the axial direction, and the axial extension 173 may face and be in contact with the inner circumferential surface of the side wall member 11 in the radial direction.

The edge of the cap 16 is placed on the first gasket 171 placed on the axially outer surface 1161 of the beading 116 within the side wall member 11. As the cap 16 is placed, the bottom surface of the cap 16 comes in contact with the axially outer surface of the first radial extension 172, and the outer circumferential surface of the cap 16 comes in contact with the inner circumferential surface of the axial extension 173. Accordingly, the position of the cap 16 with respect to the first gasket 171 may be aligned.

The upper surface, i.e., the axially outer surface, of the edge of the cap 16 and the upper surface, i.e., the axially outer surface, of the axial extension 173 of the first gasket 171 may form approximately flat surfaces.

The second gasket 175 is placed on the upper surface of the edge of the cap 16 and the upper surface of the axial extension 173 of the first gasket 171. Accordingly, the lower surface of the second radial extension 176 of the second gasket 175, i.e., the first axially inner surface provided on the radially inner side of the axially inner surface, is in contact with the cap 16, and the second axially inner surface provided on the radially outer side is in contact with the first gasket 171.

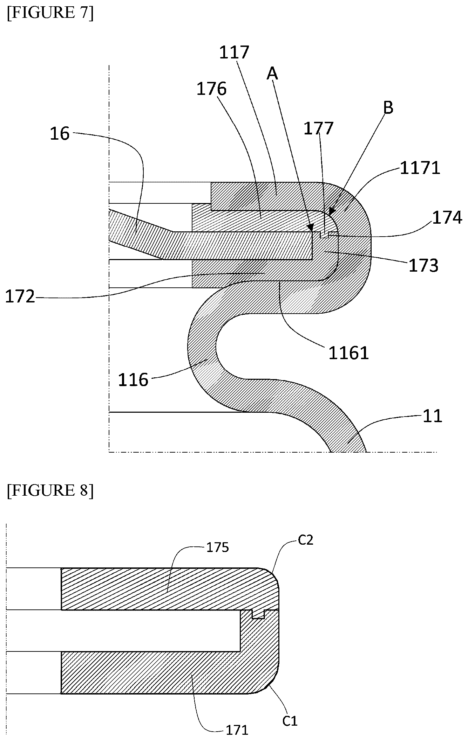

In addition, the axially outer corner of the edge of the cap 16, i.e., the corner of the radially outer surface and the axially outer surface of the cap 16, is aligned with the contact portion of the radially inner corner of the axial extension 173 of the first gasket 171 and the second radial extension 176 of the second gasket 175 (see part A of FIG. 7).

According to the first embodiment, the radially inner surface of the axial extension 173 of the first gasket 171 includes a first radially outer surface facing the radially outer surface of the cap 16 in the radial direction, and the axially inner surface of the second radial extension 176 of the second gasket 175 includes: a first axially inner surface facing the edge of the axially outer surface of the cap 16 facing the axially outer surface in the axial direction; and a second axially inner surface extending axially outer than the radially outer surface of the cap 16.

The second fastening part 177 of the second gasket 175 and the first fastening part 174 of the first gasket 171 are inserted in the axial direction and fastened to each other. Accordingly, the positional alignment of the second gasket 175 with respect to the first gasket 171 and the cap 16 is possible, and in particular, the radial movement of the second gasket 175 with respect to the first gasket 171 and the cap 16 is restricted.

As described above, before forming the crimped portion 117, the second radial extension 176 of the cap gasket 17 is already in contact with the edge surface, i.e., the axially outer surface, of the cap 16 in a radially inwardly bent form (see FIG. 6).

Subsequently, as shown in FIG. 7, the end of the side wall member 11 disposed axially outer than the beading 116 is bent radially inward to form the crimped portion 117. The crimped portion 117 is formed by plastically processing the open end section of the side wall member 11 located axially outer than the edge of the cap 16 radially inward.

The crimped portion 117 is a plastically processed portion having a shape that is bent radially inward by the inwardly bent portion 1171 of the side wall member 11, and the inwardly bent portion 1171 and the crimped portion 117 press the first radial extension 172 and the second radial extension 176 in the axial direction in the axial direction. The curved surface portion at the boundary between the beading 116 and the side wall member 11 presses the first radial extension 172 axially outward and radially inward, and the curved surface portion of the inwardly bent portion 1171, indicated as B in FIG. 7, presses the second radial extension 176 axially inward and radially inward.

Accordingly, the axial extension 173 of the cap gasket 17 is compressed in the radial direction, and the first radial extension and second radial extension of the cap gasket 17 are compressed in the axial direction.

According to the first embodiment described above, the inwardly bent portion 1171 formed during the crimping process also presses axially inward the second radial extension 176 of the second gasket 175 located behind the fastening projection of the second fastening part 177. As a result, the fastening projection of the second fastening part 177 receives a stronger insertion force in the axial direction into the fastening groove of the first fastening part 174. Accordingly, the radial position of the second gasket 175 may be more strongly controlled by the fastening structure.

Furthermore, even with the pressure applied radially inward to the second gasket 175 by the inwardly bent portion 1171, the radial movement of the radially outer lower portion of the second gasket 175 is reliably restricted by the fastening structure.

### <SECOND EMBODIMENT>

In FIG. 8, disclosed is a structure with a rounded second corner C2 provided on the axially outer side of the outer radial end of the second radial extension 176 as a second embodiment with a modified version of the cap gasket 17 of the first embodiment described above.

Preferably, the round radius of the second corner C2 may be set smaller than that of the first corner C1.

According to the second embodiment, the second corner C2 of the second gasket 175 is evenly pressed by to and comes into strong contact with the inwardly bent portion 1171. Accordingly, the second corner C2 is not excessively deformed or deformed in an unintended direction by the inwardly bent portion 1171, and the compression force in the axial direction and the compression force in the radial direction generated by the inwardly bent portion 1171 are evenly applied to the second corner C2 area. As a result, the compression force by the inwardly bent portion 1171 increases the fastening force between the first gasket 171 and the second gasket 175 and further enhances the sealing force of the cap gasket 17.

### <THIRD EMBODIMENT>

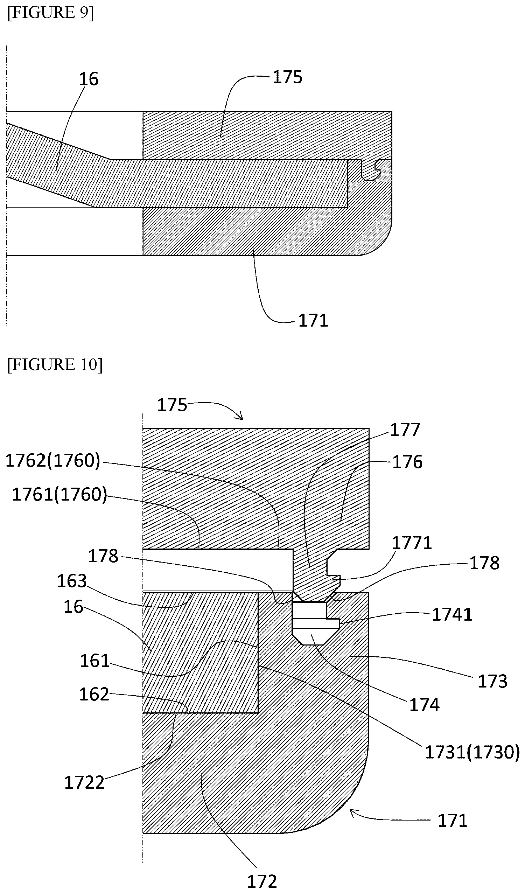

In FIGS. 9 and 10, disclosed is a cap gasket 17 with the fastening projection of the second fastening part 177 provided with a hook which is a second hooking part 1771 protruding in the radial direction from the extending end thereof and the fastening groove which is the first fastening part 174 provided with a hook groove recessed in the radial direction at the recessed end thereof as a third embodiment with a modified version of the cap gasket 17 of the first embodiment described above.

The hook of the second hooking part 1771 is provided on the radially outer side of the fastening projection of the second fastening part 177, and the hook groove of the first hooking part 1741 is provided on the radially outer side of the fastening groove of the first fastening part 174 so as to correspond with the hook of the second hooking part 1771.

Referring to FIG. 10, first, a cap 16 is inserted to the first gasket 171. Accordingly, the axially outer surface 1722 of the first radial extension 172 of the first gasket 171 comes into contact with the axially inner surface 162 of the cap 16, and the first radially outer surface 1731 of the axial extension 173 of the first gasket 171 comes into contact with the radially outer surface 161 of the cap 16.

The axially inner surface 1760 of the second gasket 175 includes a first axially inner surface 1761 in contact with the axially outer surface 163 of the cap 16, and a second axially inner surface 1762 extending radially outward than the cap 16.

The fastening groove of the first fastening part 174 of the first gasket 171 is disposed to be spaced apart radially inward from the outer radial end of the axial extension 173. As shown in FIG. 10, the portion of the axial extension 173 disposed radially inner than the fastening groove of the first fastening part 174 is supported radially outward by the cap 16, whereas the portion of the axial extension 173 disposed radially outer than the fastening groove of the first fastening part 174 has no supporting member.

Accordingly, during the temporary assembly of the cap gasket 17 and the cap 16 by inserting the fastening projection of the second fastening part 177 of the second gasket 175 into the fastening groove of the first fastening part 174 of the first gasket 171 in the axial direction, when the hook of the second hooking part 1771 presses radially outward the portion of the axial extension 173 disposed radially outer than the fastening groove of the first fastening part 174, the portion is easily deformed elastically such that the hook of the second hooking part 1771 may be easily inserted into the hook groove of the first hooking part 1741.

A fastening guide 178 inducing mutual alignment during the insertion process is provided in the fastening projection of the second fastening part 177 and the fastening groove of the first fastening part 174. The fastening guide 178 may have a chamfered shape provided near the extending end of the fastening projection of the second fastening part 177 and/or the entrance of the fastening groove of the first fastening part 174.

After the hook of the second hooking part 1771 is inserted into the hook groove of the first hooking part 1741, the second gasket 175 and the first gasket 171 are fastened together by the hook of the second hooking part 1771 and the hook groove of the first hooking part 1741 so as to prevent moving apart from each other in the axial direction. In addition, since the side wall member 11 supports the axially outer circumferential surface of the first gasket 171 radially inward during the process of inserting the cap 16 and cap gasket 17 into the can 10 (see FIG. 6), the fastening between the hook of the second hooking part 1771 and the hook groove of the first hooking part 1741 is reinforced. Furthermore, during the process of bending the side wall member 11 inward (see FIG. 7), the second gasket 175 is more strongly fastened to the first gasket 171 by the hook groove and hook which are the first hooking part 1741 and the second hooking part 1771.

### <FOURTH EMBODIMENT>

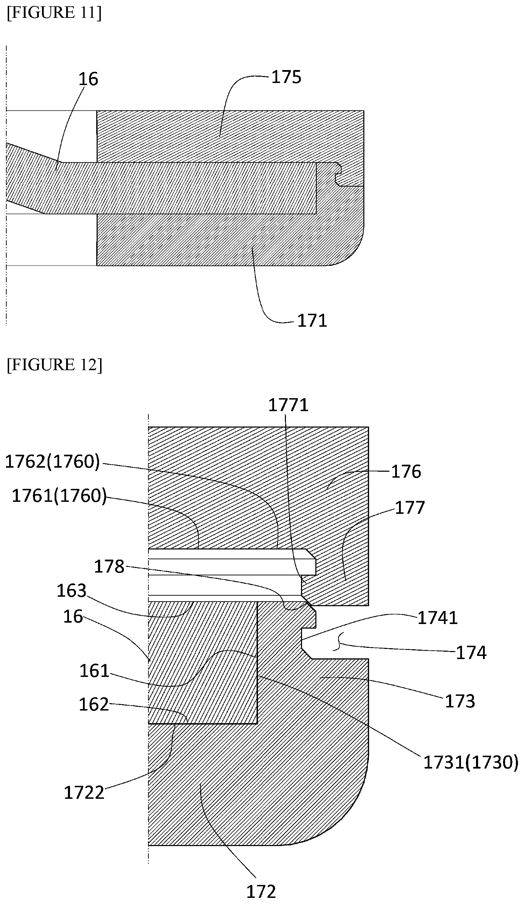

In FIGS. 11 and 12, a fourth embodiment of the cap gasket 17 is disclosed. In contrast to the third embodiment, in the cap gasket 17 according to the fourth embodiment, the first fastening part 174 of the first gasket 171 and the second fastening part 177 of the second gasket 175 are disposed at positions corresponding to the outer radial end of the axial extension 173.

The first fastening part 174 includes a fastening groove recessed in the axial direction, and the second fastening part 177 includes a fastening projection protruding in the axial direction. The fastening projection of the second fastening part 177 includes a hook which is a second hooking part 1771 protruding radially inward from the extending end thereof, and the fastening groove of the first fastening part 174 includes a hook groove which is a first hooking part 1741 recessed radially inward.

The portion of the axial extension 173 disposed radially inner than the fastening groove of the first fastening part 174 is supported radially outward by the cap 16. Meanwhile, there is no member supporting the portion of the axial extension 173 disposed radially inner than the fastening projection of the second fastening part 177.

Accordingly, during the temporary assembly of the cap gasket 17 and the cap 16 by inserting the fastening projection of the second fastening part 177 of the second gasket 175 into the fastening groove of the first fastening part 174 of the first gasket 171 in the axial direction, when the hook of the second hooking part 1771 presses the portion of the axial extension 173 disposed radially inner than the fastening groove of the first fastening part 174, the fastening projection of the second fastening part 177 is easily elastically deformed radially outward due to the reaction such that the hook of the second hooking part 1771 may be easily inserted into the hook groove of the first hooking part 1741.

A fastening guide 178 inducing mutual alignment during the insertion process is provided in the fastening projection of the second fastening part 177 and the fastening groove of the first fastening part 174. The fastening guide 178 may have a chamfered shape provided near the extending end of the fastening projection of the second fastening part 177 and/or the entrance of the fastening groove of the first fastening part 174.

After the hook of the second hooking part 1771 is inserted into the hook groove of the first hooking part 1741, the second gasket 175 and the first gasket 171 are fastened together by the hook of the second hooking part 1771 and the hook groove of the first hooking part 1741 so as to prevent moving apart from each other in the axial direction. In addition, since the side wall member 11 supports the outer circumferential surface of the fastening projection of the second fastening part 177 radially inwardly during the process of inserting the cap 16 and cap gasket 17 into the can 10 (see FIG. 6), the fastening between the hook of the second hooking part 1771 and the hook groove of the first hooking part 1741 is reinforced. Furthermore, during the process of bending the side wall member 11 inward (see FIG. 7), the second gasket 175 is more strongly fastened to the first gasket 171 by the hook groove and hook which are the first hooking part 1741 and the second hooking part 1771.

### <FIFTH EMBODIMENT>

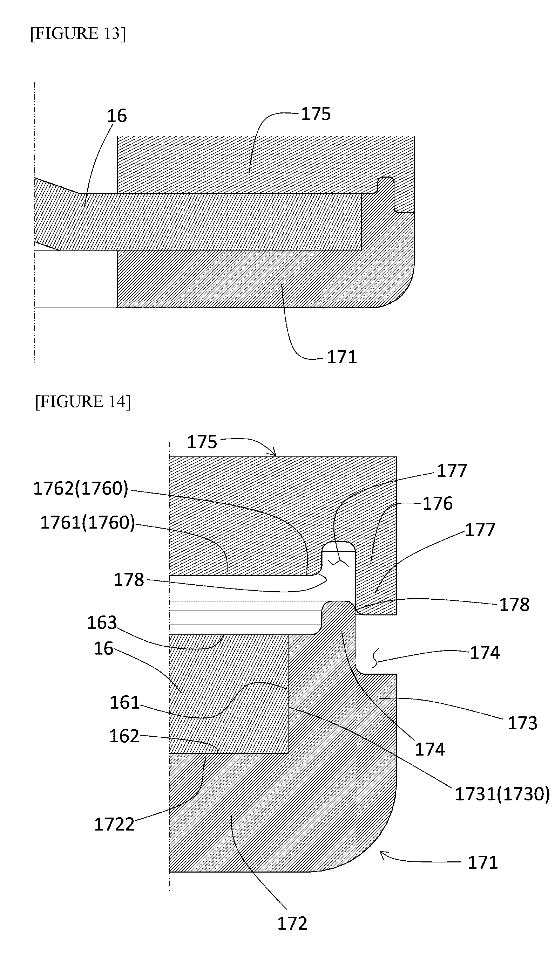

In FIGS. 13 and 14, a fifth embodiment of the cap gasket 17 is disclosed. The cap gasket 17 according to the fifth embodiment is provided with two first fastening parts 174 of the first gasket 171 and two second fastening parts 177 of the second gasket 175. The two first fastening parts 174 are arranged to be connected in the radial direction, and the two second fastening parts 177 are also arranged to be connected in the radial direction.

The cap gasket 17 according to the fifth embodiment is implemented in a manner that each of the two first fastening parts 174 is provided with a first fastening projection arranged on the radially inner side and a first fastening groove arranged on the radially outer side, and each of the two second fastening parts 177 is provided with a second fastening groove arranged on the radially inner side and a second fastening projection arranged on the radially outer side. In addition, the first fastening projection of the first fastening part 174 and the second fastening groove of the second fastening part 177 are mutually inserted in the axial direction, and the second fastening projection of the second fastening part 177 and the first fastening groove of the first fastening part 174 are mutually inserted in the axial direction.

The first fastening projection of the first fastening part 174 and the second fastening groove of the second fastening part 177 are spaced apart from each other in the radial direction between the inner radial end and the outer radial end of the axial extension. In addition, the second fastening projection of the second fastening part 177 and the first fastening groove of the first fastening part 174 are arranged at positions corresponding to the outer radial end of the axial extension in the radial direction.

Fastening guides 178 inducing mutual alignment during the insertion process are provided in the first fastening projection of the first fastening part 174 and the second fastening groove of the second fastening part 177, and the second fastening projection of the second fastening part 177 and the first fastening groove of the first fastening part 174. The fastening guide 178 may have a rounded fillet shape provided near the extending ends of the first fastening projection of the first fastening part 174 and the second fastening projection of the second fastening part 177 and/or the entrances of the first fastening groove of the first fastening part 174 and the second fastening groove of the second fastening part 177.

During the temporary assembly of the cap gasket 17 and the cap 16 by inserting the two first fastening parts 174 and the second fastening part 177 in the axial direction, the second fastening projection of the second fastening part 177 of the second gasket 175 having a relatively small radial width is easily elastically deformed radially outward such that the first fastening part 174 and the second fastening part 177 may be easily fastened.

According to the fifth embodiment described above, the inwardly bent portion 1171 formed during the crimping process also presses axially inward the second radial extension 176 of the second gasket 175 located behind the second fastening groove of the second fastening part 177 and the second fastening projection of the second fastening part 177. As a result, the first fastening projection of the first fastening part 174 and the second fastening projection of the second fastening part 177 receive a stronger insertion force in the axial direction into the second fastening groove of the second fastening part 177 and the first fastening groove of the first fastening part 174. Accordingly, the radial position of the second gasket 175 may be more strongly controlled by the fastening structure.

Furthermore, even with the pressure applied radially inward to the second gasket 175 by the inwardly bent portion 1171, the radial movement of the radially outer lower portion of the second gasket 175 is reliably restricted by the fastening structure.

### <SIXTH EMBODIMENT>

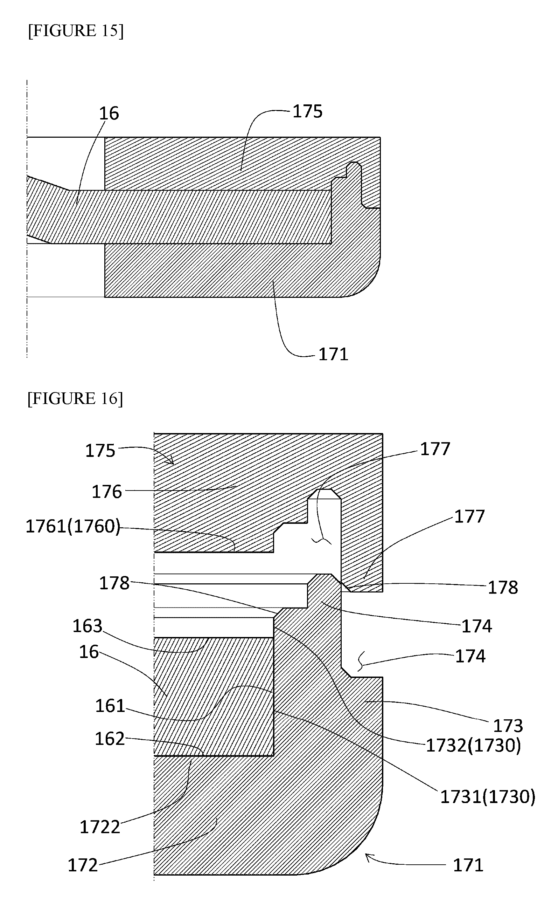

In FIGS. 15 and 16, a cap gasket 17 according to a sixth embodiment is disclosed.

According to the sixth embodiment, the radially inner surface 1730 of the axial extension 173 of the first gasket 171 includes: a first radially outer surface 1731 facing the radially outer surface 161 of the cap 16 in the radial direction; and a second radially outer surface 1732 extending axially outer than the radially outer surface 161 of the cap 16, and the axially inner surface 1760 of the second radial extension 176 of the second gasket 175 includes: a first axially inner surface 1761 facing the edge of the axially outer surface 163 of the cap 16 facing the axially outer surface in the axial direction.

Accordingly, with the cap 16 temporarily fastened to the first gasket 171, the upper surface of the axial extension 173 of the first gasket 171 protrudes further upward than the upper surface, i.e., the axially outer surface 163, of the edge of the cap 16.

The second radial extension 176 of the second gasket 175 is placed on the upper surface of the edge of the cap 16 and the upper surface of the axial extension 173 of the first gasket 171. Accordingly, the first axially inner surface 1761 of the second radial extension 176 of the second gasket 175 is in contact with the cap 16, and the radially outer surface 161 and the corner of the axially outer surface 163 of the cap 16 are aligned with the radially outer side corners of the first radially outer surface 1731 of the second gasket 175.

A fastening guide 178 is provided at the inner radial end of the upper end portion of the axial extension 173 to guide the insertion of the second axially inner surface 1762 of the second gasket 175.

The cap gasket 17 according to the sixth embodiment is provided with two first fastening parts 174 of the first gasket 171 and two second fastening parts 177 of the second gasket 175. The two first fastening parts 174 are arranged to be connected in the radial direction, and the two second fastening parts 177 are also arranged to be connected in the radial direction. Each of the two first fastening parts 174 is provided with a first fastening projection arranged on the radially inner side and a first fastening groove arranged on the radially outer side, and each of the two second fastening parts 177 is provided with a second fastening groove arranged on the radially inner side and a second fastening projection arranged on the radially outer side. In addition, the first fastening projection of the first fastening part 174 and the second fastening groove of the second fastening part 177 are mutually inserted in the axial direction, and the second fastening projection of the second fastening part 177 and the first fastening groove of the first fastening part 174 are mutually inserted in the axial direction.

The first fastening projection of the first fastening part 174 and the second fastening groove of the second fastening part 177 are spaced apart from each other in the radial direction between the inner radial end and the outer radial end of the axial extension. In addition, the second fastening projection of the second fastening part 177 and the first fastening groove of the first fastening part 174 are arranged at positions corresponding to the outer radial end of the axial extension in the radial direction.

Fastening guides 178 inducing mutual alignment during the insertion process are provided in the first fastening projection of the first fastening part 174 and the second fastening groove of the second fastening part 177, and the second fastening projection of the second fastening part 177 and the first fastening groove of the first fastening part 174. The fastening guide 178 may have a chamfered shape provided near the extending ends of the first fastening projection of the first fastening part 174 and the second fastening projection of the second fastening part 177 and/or the entrances of the first fastening groove of the first fastening part 174 and the second fastening groove of the second fastening part 177.

During the temporary assembly of the cap gasket 17 and the cap 16 by inserting the two first fastening parts 174 and the second fastening part 177 in the axial direction, the second fastening projection of the second fastening part 177 of the second gasket 175 having a relatively small radial width is easily elastically deformed radially outward such that the first fastening part 174 and the second fastening part 177 may be easily fastened.

According to the sixth embodiment described above, the inwardly bent portion 1171 formed during the crimping process also presses axially inward the second radial extension 176 of the second gasket 175 located behind the second fastening groove of the second fastening part 177 and the second fastening projection of the second fastening part 177. As a result, the first fastening projection of the first fastening part 174 and the second fastening projection of the second fastening part 177 receive a stronger insertion force in the axial direction into the second fastening groove of the second fastening part 177 and the first fastening groove of the first fastening part 174. Accordingly, the radial position of the second gasket 175 may be more strongly controlled by the fastening structure.

Furthermore, even with the pressure applied radially inward to the second gasket 175 by the inwardly bent portion 1171, the radial movement of the radially outer lower portion of the second gasket 175 is reliably restricted by the fastening structure.

### <SEVENTH EMBODIMENT>

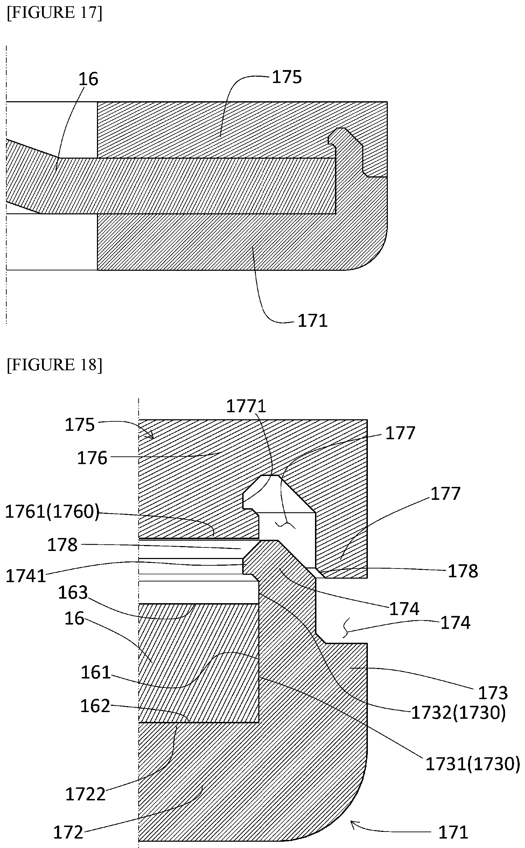

In FIGS. 17 and 18, a cap gasket 17 according to a seventh embodiment is disclosed.

According to the seventh embodiment, the radially inner surface 1730 of the axial extension 173 of the first gasket 171 includes: a first radially outer surface 1731 facing the radially outer surface 161 of the cap 16 in the radial direction; and a second radially outer surface 1732 extending axially outer than the radially outer surface 161 of the cap 16, and the axially inner surface 1760 of the second radial extension 176 of the second gasket 175 includes: a first axially inner surface 1761 facing the edge of the axially outer surface 163 of the cap 16 facing the axially outer surface in the axial direction.

Accordingly, with the cap 16 temporarily fastened to the first gasket 171, the upper surface of the axial extension 173 of the first gasket 171 protrudes further upward than the upper surface, i.e., the axially outer surface 163, of the edge of the cap 16.

The second radial extension 176 of the second gasket 175 is placed on the upper surface of the edge of the cap 16 and the upper surface of the axial extension 173 of the first gasket 171. Accordingly, the first axially inner surface 1761 of the second radial extension 176 of the second gasket 175 is in contact with the cap 16, and the radially outer surface 161 and the corner of the axially outer surface 163 of the cap 16 are aligned with the radially outer side corners of the first radially outer surface 1731 of the second gasket 175.

The cap gasket 17 according to the seventh embodiment is provided with two first fastening parts 174 of the first gasket 171 and two second fastening parts 177 of the second gasket 175. The two first fastening parts 174 are arranged to be connected in the radial direction, and the two second fastening parts 177 are also arranged to be connected in the radial direction. Each of the two first fastening parts 174 is provided with a first fastening projection arranged on the radially inner side and a first fastening groove arranged on the radially outer side, and each of the two second fastening parts 177 is provided with a second fastening groove arranged on the radially inner side and a second fastening projection arranged on the radially outer side. In addition, the first fastening projection of the first fastening part 174 and the second fastening groove of the second fastening part 177 are mutually inserted in the axial direction, and the second fastening projection of the second fastening part 177 and the first fastening groove of the first fastening part 174 are mutually inserted in the axial direction.

The first fastening projections of the first fastening part 174 and the second fastening grooves of the second fastening part 177 are arranged at positions corresponding to the inner radial ends of the axial extension 173. In addition, the second fastening projection of the second fastening part 177 and the first fastening groove of the first fastening part 174 are arranged at positions corresponding to the outer radial end of the axial extension in the radial direction.

According to the seventh embodiment, the first fastening projection of the first fastening part 174 includes a hook which is a first hooking part 1741 protruding radially inward from the extending end thereof, and the second fastening groove of the second fastening part 177 includes a hook groove which is a second hooking part 1771 recessed radially inward from the recessed end thereof.

Fastening guides 178 inducing mutual alignment during the insertion process are provided in the first fastening projection of the first fastening part 174 and the second fastening groove of the second fastening part 177, and the second fastening projection of the second fastening part 177 and the first fastening groove of the first fastening part 174. The fastening guide 178 may have a chamfered shape provided near the extending ends of the first fastening projection of the first fastening part 174 and the second fastening projection of the second fastening part 177 and/or the entrances of the first fastening groove of the first fastening part 174 and the second fastening groove of the second fastening part 177.

During the temporary assembly of the cap gasket 17 and the cap 16 by inserting the two first fastening parts 174 and the second fastening part 177 in the axial direction, the second fastening projection of the second fastening part 177 of the second gasket 175 having a relatively small radial width is easily elastically deformed radially outward such that the first fastening part 174 and the second fastening part 177 may be easily fastened. In addition, due to the fastening guide 178 elongated on the radially outer side of the first fastening projection of the first fastening part 174 of the first gasket 171, the first fastening projection of the first fastening part 174 is easily elastically deformed radially outward such that the first fastening part 174 and the second fastening part 177 may be easily fastened.

The hook of the first hooking part 1741 strengthens the temporary fastening force of the first gasket 171 and the second gasket 175.

According to the seventh embodiment described above, the inwardly bent portion 1171 formed during the crimping process also presses axially inward the second radial extension 176 of the second gasket 175 located behind the second fastening groove of the second fastening part 177 and the second fastening projection of the second fastening part 177. As a result, the first fastening projection of the first fastening part 174 and the second fastening projection of the second fastening part 177 receive a stronger insertion force in the axial direction into the second fastening groove of the second fastening part 177 and the first fastening groove of the first fastening part 174. Accordingly, the radial position of the second gasket 175 may be more strongly controlled by the fastening structure.

In addition, due to the fastening guide 178 elongated on the radially outer side and the hook of the first hooking part 1741 of the first fastening projection of the first fastening part 174 of the first gasket 171, the radially outer side corner of the first radially outer surface 1731 of the second gasket 175 comes into strong contact with the radially outer surface 161 and the corner portion of the axially outer surface 163 of the cap 16, thereby further enhancing the sealing force.

### <EIGHTH EMBODIMENT>

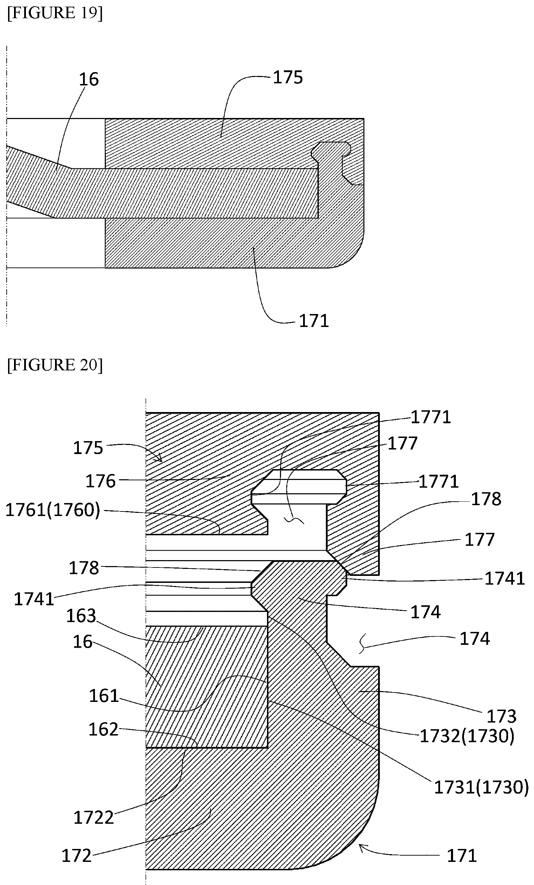

In FIGS. 19 and 20, a cap gasket 17 according to an eighth embodiment is disclosed. The description will be mainly focused on differences from the seventh embodiment.

According to the eighth embodiment, the first fastening projection of the first fastening part 174 includes hooks which are first hooking parts 1741 protruding in two radial directions from the extending end thereof, respectively, and the second fastening groove of the second fastening part 177 includes hook grooves which are second hooking parts 1771 recessed in two radial directions from the recessed end thereof, respectively.

During the temporary assembly of the cap gasket 17 and the cap 16 by inserting the two first fastening parts 174 and the second fastening part 177 in the axial direction, the second fastening projection of the second fastening part 177 of the second gasket 175 having a relatively small radial width and, in particular, having a smaller radial thickness of the second fastening projection of the second fastening part 177 due to the hook groove of the second hooking part 1771, is easily elastically deformed radially outward such that the first fastening part 174 and the second fastening part 177 may be easily fastened.

In addition, due to the fastening guide 178 elongated on the radially inner side of the first fastening projection of the first fastening part 174 of the first gasket 171 and the hook groove of the second hooking part 1771 on the radially inner side of the second fastening groove of the second fastening part 177, the corner portion of the first axially inner surface 1761 of the second gasket 175 may also be easily elastically deformed radially inward such that the first fastening part 174 and the second fastening part 177 may be easily fastened.

According to the eighth embodiment, the first hooking part 1741 of the first fastening projection of the first fastening part 174 and the second hooking part 1771 of the second fastening groove of the corresponding second fastening part 177 are provided on both radial sides such that the temporary fastening force of the first gasket 171 and the second gasket 175 is further strengthened.

### <NINTH EMBODIMENT>

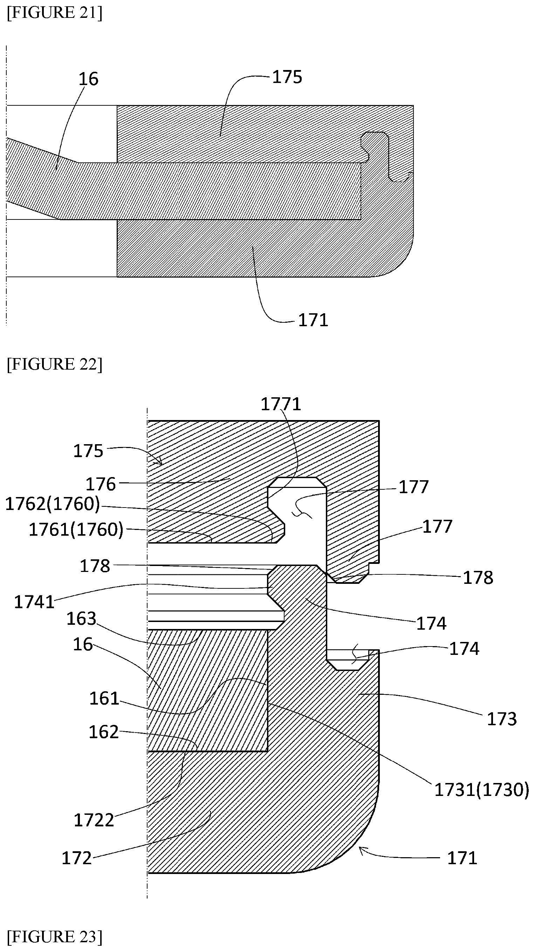

In FIGS. 21 and 22, a cap gasket 17 according to a ninth embodiment is disclosed.

According to the first embodiment, the radially inner surface 1730 of the axial extension 173 of the first gasket 171 includes a first radially outer surface 1731 facing the radially outer surface 161 of the cap 16 in the radial direction, and the axially inner surface 1760 of the second radial extension 176 of the second gasket 175 includes: a first axially inner surface 1761 facing the edge of the axially outer surface of the cap 16 facing the axially outer surface in the axial direction; and a second axially inner surface 1762 extending axially outer than the radially outer surface 161 of the cap 16.

Accordingly, with the cap 16 temporarily fastened to the first gasket 171, the upper surface of the axially outer surface 163 of the cap 16 and the inner radial end of the axial extension 173 of the first gasket 171 may form approximately flat surfaces. That is, the radially outer surface 161 and the corner of the axially outer surface 163 of the cap 16 is aligned with the corner of the first radially outer surface 1731 of the axial extension 173 of the first gasket 171.

The second gasket 175 is placed on the upper surface of the edge of the cap 16 and the upper surface of the axial extension 173 of the first gasket 171. Accordingly, the first axially inner surface 1761 of the second radial extension 176 of the second gasket 175 is in contact with the cap 16, and the second axially inner surface 1762 is in contact with the first gasket 171.

The cap gasket 17 according to the ninth embodiment is provided with two first fastening parts 174 of the first gasket 171 and two second fastening parts 177 of the second gasket 175. The two first fastening parts 174 are arranged to be connected in the radial direction, and the two second fastening parts 177 are also arranged to be connected in the radial direction. Each of the two first fastening parts 174 is provided with a first fastening projection arranged on the radially inner side and a first fastening groove arranged on the radially outer side, and each of the two second fastening parts 177 is provided with a second fastening groove arranged on the radially inner side and a second fastening projection arranged on the radially outer side. In addition, the first fastening projection of the first fastening part 174 and the second fastening groove of the second fastening part 177 are mutually inserted in the axial direction, and the second fastening projection of the second fastening part 177 and the first fastening groove of the first fastening part 174 are mutually inserted in the axial direction.

The first fastening projections of the first fastening part 174 and the second fastening grooves of the second fastening part 177 are arranged at positions corresponding to the inner radial ends of the axial extension 173. In addition, the second fastening projection of the second fastening part 177 and the first fastening groove of the first fastening part 174 are arranged at positions spaced apart from the inner radial end and the outer radial end of the axial extension 173 between the inner radial end and the outer radial end of the axial extension 173 in the radial direction.

According to the ninth embodiment, the first fastening projection of the first fastening part 174 includes a hook which is a first hooking part 1741 protruding radially inward from the extending end thereof, and the second fastening groove of the second fastening part 177 includes a hook groove which is a second hooking part 1771 recessed radially inward from the recessed end thereof.

Fastening guides 178 inducing mutual alignment during the insertion process are provided in the first fastening projection of the first fastening part 174 and the second fastening groove of the second fastening part 177, and the second fastening projection of the second fastening part 177 and the first fastening groove of the first fastening part 174. The fastening guide 178 may have a chamfered shape provided near the extending ends of the first fastening projection of the first fastening part 174 and the second fastening projection of the second fastening part 177 and/or the entrances of the first fastening groove of the first fastening part 174 and the second fastening groove of the second fastening part 177.

During the temporary assembly of the cap gasket 17 and the cap 16 by inserting the two first fastening parts 174 and the second fastening part 177 in the axial direction, the second fastening projection of the second fastening part 177 of the second gasket 175 having a relatively small radial width is easily elastically deformed radially outward such that the first fastening part 174 and the second fastening part 177 may be easily fastened.

In addition, due to the hook groove of the second hooking part 1771 on the radially inner side of the second fastening groove of the second fastening part 177, the corner portion of the first axially inner surface 1761 of the second gasket 175 may also be easily elastically deformed radially inward such that the first fastening part 174 and the second fastening part 177 may be easily fastened.

According to the ninth embodiment described above, the inwardly bent portion 1171 formed during the crimping process also presses axially inward the second radial extension 176 of the second gasket 175 located behind the second fastening groove of the second fastening part 177 and the second fastening projection of the second fastening part 177. As a result, the first fastening projection of the first fastening part 174 and the second fastening projection of the second fastening part 177 receive a stronger insertion force in the axial direction into the second fastening groove of the second fastening part 177 and the first fastening groove of the first fastening part 174. Accordingly, the radial position of the second gasket 175 may be more strongly controlled by the fastening structure.

In addition, due to the hook of the first hooking part 1741 of the first fastening projection of the first fastening part 174 of the first gasket 171, the radially outer side corner of the first radially outer surface 1731 of the second gasket 175 comes into strong contact with the radially outer surface 161 and the corner portion of the axially outer surface 163 of the cap 16, thereby further enhancing the sealing force.

### [BATTERY CELL]

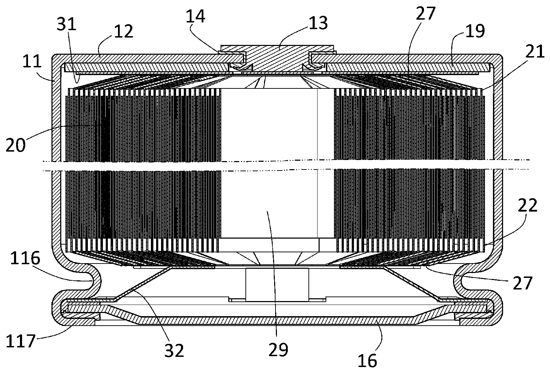

FIG. 23 illustrates a battery cell employing the cap gasket 17 according to the first embodiment.

The battery cell according to the embodiment includes an electrode assembly 20 and a housing 10 that accommodates the electrode assembly.

The electrode assembly 20 may have a form of a jelly roll, with a first electrode 21 and a second electrode 22 laminated with a separator interposed therebetween and wound around a predetermined core axis. The electrode assembly 20 may have a cylindrical shape surrounding a core cavity 29. In the embodiment, the first electrode 21 is implemented as an anode, and the second electrode 22 is implemented as a cathode. However, the present invention is not limited thereto.

Referring to FIG. 23, the current collector of the first electrode 21 may protrude outward from the first axial end to have the surface thereof exposed, and the current collector of the second electrode 22 may protrude axially outward to have the surface thereof exposed. The portion of the current collector exposed outward from the axial end of the electrode assembly constitutes an electrode tab 27 of the corresponding electrode. In the embodiment, the current collector of the first electrode 21 is implemented using aluminum foil, and the current collector of the second electrode 22 is implemented using copper foil. However, the present invention is not limited thereto.

The electrode tab 27 is bent radially inward and overlaps in the axial direction.

The electrode tab of the first electrode 21 is bonded to the first current collecting plate 31, and the electrode tab of the second electrode 22 is bonded to the second current collecting plate 32. In the embodiment, the current collector of the first electrode 21 is implemented using aluminum foil, and the current collector of the second electrode 22 is implemented using copper foil. However, the present invention is not limited thereto.

The housing 10 is implemented using a cylindrical can 10 made of a metal material. The can 10 includes: a side wall member 11 extending in the axial direction and enclosing an internal space extending in the axial direction; and a bottom member 12 connected to the first axial end of the side wall member 11. Accordingly, the first axial end of the side wall member 11 forms a closed end, and the second axial end of the side wall member 11 provided on the opposite side defines an open end.

The first electrode terminal 13 is installed through the center of the bottom member 12 with a gasket 14 interposed therebetween. The gasket 14 seals the gap between the first electrode terminal 13 and the bottom member 12, and electrically insulates the first electrode terminal 13 from the bottom member 12.

With the electrode assembly 20 accommodated in the can 10, the first current collecting plate 31 is bonded to the first electrode terminal 13. Thus, the first electrode 21 and the first electrode terminal 13 are electrically connected.

An insulator 19 is interposed between the first current collecting plate 31 and the bottom member 12. Accordingly, the first current collecting plate 31 is electrically insulated from the bottom member 12.

With the electrode assembly 20 accommodated in the can 10, the axial second end of the side wall member 11 is plastically deformed radially inward to form a beading 116.

The edge of the second current collecting plate 32 may be bonded and fixed to the beading 116 by welding or other methods. Accordingly, the can 10 is electrically connected to the second current collecting plate 32. The bottom member 12 of the can 10 may form a second electrode terminal of the battery cell. The second electrode 22 and the bottom member are electrically connected.

The battery cell includes a cap 16 covering the open end. The edge of the cap 16 is pressed by a beading 116 and a crimped portion 117 provided at the open end of the can 10, and is fixed to the side wall member 11 of the can 10.

To seal the can 10 and the side wall member 11, the above-described cap gasket 17 is interposed between the edge of the cap 16 and the side wall member 11. The edge of the cap 16 is pressed by the beading 116 and the crimped portion 117 with the cap gasket 17 interposed therebetween, thereby sealing the connecting portion between the cap 16 and the can 10.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A cap gasket having a form of a loop surrounding an outer radial end of a cap extending radially to cover an axial end of an internal space defined by a housing of a battery cell, the cap gasket comprising:
a first gasket and a second gasket fastened to the first gasket at an axially outer side of the first gasket,
wherein the first gasket comprises:
a first radial extension extending radially;
an axial extension extending axially outward from an outer radial end of the first radial extension; and
one or a plurality of first fastening parts provided at an outer axial end of the axial extension;
the second gasket comprises:
a second radial extension extending radially; and
one or a plurality of second fastening parts provided at an axially inner side of an outer radial end of the second radial extension and fastened to the one or the plurality of first fastening parts in axial direction.

2. The cap gasket of claim 1, wherein the one or the plurality of first fastening parts and the one or the plurality of second fastening parts fastened thereto are radially spaced apart from an inner radial end and an outer radial end of the axial extension.

3. The cap gasket of claim 1, wherein the one or the plurality of first fastening parts and the one or the plurality of second fastening parts fastened thereto are disposed at a radial position corresponding to an inner radial end of the axial extension.

4. The cap gasket of claim 1, wherein the one or the plurality of first fastening parts and the one or the plurality of second fastening parts fastened thereto are disposed at a radial position corresponding to an outer radial end of the axial extension.

5. The cap gasket of claim 1, wherein the one or the plurality of first fastening parts and the one or the plurality of second fastening parts fastened thereto extend along circumferential directions of the first gasket and the second gasket, respectively.

6. The cap gasket of claim 5, wherein the plurality of first fastening parts are arranged along a radial direction, and
the plurality of second fastening parts are arranged along radial direction to correspond to the plurality of first fastening parts.

7. The cap gasket of claim 6, wherein at least two first fastening parts are arranged to be connected in radial direction, and
at least two second fastening parts corresponding to the at least two first fastening parts are arranged to be connected in radial direction.

8. The cap gasket of claim 1, wherein the one first fastening part and the one second fastening part are provided with a fastening groove recessed in an axial direction and a fastening projection extending in axial direction to be inserted into the fastening groove in axial direction, respectively, or the one second fastening part and the one first fastening part are provided with the fastening groove recessed in axial direction and the fastening projection extending in axial direction to be inserted into the fastening groove in axial direction, respectively

9. The cap gasket of claim 8, wherein one first fastening part and another first fastening part of the plurality of first fastening parts are provided with a fastening groove and a fastening projection, respectively, and one second fastening part and another second fastening part of the plurality of second fastening parts corresponding to the one first fastening part and the another first fastening part are provided with a fastening projection and a fastening groove, respectively.

10. The cap gasket of claim 9, wherein the one first fastening part and the another first fastening part are arranged to be connected in radial direction, and
the one second fastening part and the another second fastening part corresponding to the one first fastening part and the another first fastening part are arranged to be connected in radial direction.

11. The cap gasket of claim 8, wherein the fastening projection is provided with a hook protruding radially from an extending end thereof, and
the fastening groove corresponding to the fastening projection is provided with a hook groove recessed radially at a recessed end thereof to accommodate the hook in the radial direction.

12. The cap gasket of claim 11, wherein the hook is provided at one of or both of a radially inner side and a radially outer side of the fastening projection, and the hook groove is provided at one of or both of a radially inner side and a radially outer side of the fastening groove to correspond to the hook.

13. The cap gasket of claim 1, wherein a radially inner surface of the axial extension of the first gasket is provided with a first radially outer surface facing a radially outer surface of the cap in radial direction, and
an axially inner surface of the second radial extension of the second gasket is provided with a first axially inner surface facing an edge of an axially outer surface of the cap facing an axially outer surface in axial direction.

14. The cap gasket of claim 13, wherein the radially inner surface of the axial extension of the first gasket is further provided with a second radially outer surface extending axially outer than the radially outer surface of the cap.

15. The cap gasket of claim 13, wherein the axially inner surface of the second radial extension of the second gasket is further provided with a second axially inner surface extending axially outer than the radially outer surface of the cap.

16. The cap gasket of claim 1, wherein a first corner provided on an axially inner side of the outer radial end of the first radial extension is rounded.

17. The cap gasket of claim 1, wherein a second corner provided on an axially outer side of the outer radial end of the second radial extension is rounded.

18. The cap gasket of claim 17, wherein a first corner provided on the axially inner side of the outer radial end of the first radial extension is rounded,
a round radius of the second corner is smaller than that of the first corner.

19. A battery cell comprising:
a cap gasket according to any one of claims 1 to 18;
a can provided with a side wall member with an open end;
a beading formed by recessing radially inward the side wall member near the open end;
a crimped portion disposed axially outer than the beading and formed by caulking an end of the side wall member radially inward; and
a cap having an edge disposed axially between the beading and crimped portion to be compressed and fixed with a cap gasket therebetween,
wherein the first gasket is disposed on an axially outer surface of the beading,
the edge of the cap is in contact with an axially outer surface of a first radial extension of the first gasket and a radially inner surface of an axial extension,
an axially inner surface of a second radial extension of the second gasket is in contact with the edge of the cap, and
a second fastening part of the second gasket is axially fastened to a first fastening part of the first gasket.

20. The battery cell of claim 19, wherein an axially outer corner of the edge of the cap is aligned with the radially inner surface of the axial extension of the first gasket and the axially inner surface of the second radial extension of the second gasket.
